# EUROPÄISCHE PATENTANMELDUNG

(11) **EP 4 789 524 A1**
(43) Veröffentlichungstag der Anmeldung: **12.08.2026**
(21) Anmeldenummer: 26151783.3
(22) Anmeldetag: 14.01.2026
(51) Int. Cl.: A01C 7/04

(54) **VORBELEGEN VON KORNAUFNAHMEN EINES ROTIEREND ANTREIBBAREN KORNAUFNAHMEKÖRPERS EINER KORNVEREINZELUNGSEINRICHTUNG EINER SÄMASCHINE**

(30) Priorität: 11.02.2025 DE 102025000504
(71) Anmelder: Amazonen-Werke H. Dreyer SE & Co. KG, 49205 Hasbergen (DE)
(72) Erfinder: WARNS, Felix, 49205 Hasbergen-Gaste (DE)
(74) Vertreter: Heisel, Per-Christian

(57) **Zusammenfassung**

Die Erfindung betrifft ein Verfahren zum Vorbelegen von Kornaufnahmen (16) eines rotierend antreibbaren Kornaufnahmekörpers (14) einer Kornvereinzelungseinrichtung (12) einer Sämaschine vor dem Beginn oder der Fortsetzung einer Kornablage auf einer landwirtschaftlichen Nutzfläche, mit den Schritten: Herstellen eines pneumatischen Anhaftungszustands in der Kornvereinzelungseinrichtung (12), bei welchem Körner (K) an Kornaufnahmen (16) des Kornaufnahmekörpers (14) anhaften, und rotatorisches Antreiben des Kornaufnahmekörpers (14) zum Bewegen der Kornaufnahmen (16) durch einen Kornvorrat (KV) in der Kornvereinzelungseinrichtung (12) mittels einer Antriebseinrichtung (18).

## Beschreibung

Die Erfindung betrifft ein Verfahren zum Vorbelegen von Kornaufnahmen eines rotierend antreibbaren Kornaufnahmekörpers einer Kornvereinzelungseinrichtung einer Sämaschine nach dem Oberbegriff des Patentanspruchs 1 und eine Sämaschine nach dem Oberbegriff des Patentanspruchs 10.

Bei pneumatischen Vereinzelungseinrichtungen zum Vereinzeln von Saatgut muss die Vereinzelungsscheibe nach der Abschaltung des den Vereinzelungsdruck zur Verfügung stellenden Gebläses vor dem weiteren Säen mit Körnern vorbelegt werden. Durch die Vorbelegung der Vereinzelungsscheibe gelangt mit dem ersten Fahrimpuls direkt das erste Korn ohne zeitliche Anlaufverzögerung in den Boden.

Bei den aus der Praxis bekannten Lösungen erfolgt die Veranlassung des Vorbelegens manuell durch den Anwender über ein Bedienterminal. Dadurch, dass die Vorbelegung manuell über das Terminal veranlasst werden muss, wird die Vorbewegung vergleichsweise häufig nicht durchgeführt, sodass es zu Lücken bei der Aussaat oder dem Feldaufgang kommt oder Rückwärtsfahrten erforderlich sind.

Aus der Druckschrift EP 2 517 545 B1 ist ein Vorbelegungskonzept bekannt, bei welchem die Messdaten eines Saatgutsensors in einer Ablageleitung erforderlich sind, um eine Vorbelegung vor dem eigentlichen Ausbringvorgang durchzuführen. Die Verwendung eines solchen Saatgutsensors führt zu gesteigerten Kosten und einem erhöhten Ausfallrisiko der Vorbelegungsfunktion. Außerdem gelangen im Rahmen der Vorbelegung stets ein oder mehrere Körner auf die landwirtschaftliche Nutzfläche.

Die der Erfindung zugrunde liegende Aufgabe besteht also darin, die Vorbelegung einer Vereinzelungseinrichtung zu vereinfachen.

Die Aufgabe wird gelöst durch ein Verfahren der eingangs genannten Art, wobei eine Steuerungseinrichtung im Rahmen des erfindungsgemäßen Verfahrens die Antriebseinrichtung, mittels welcher der Kornaufnahmekörper rotatorisch angetrieben wird, nach dem Herstellen des pneumatischen Anhaftungszustands in der Kornvereinzelungseinrichtung selbsttätig derart ansteuert, dass der Kornaufnahmekörper eine Vorbelegungsrotation über einen vorgegebenen Vorbelegungsdrehwinkel und/oder über eine vorgegebene Vorbelegungszeitdauer ausführt. Dadurch, dass die Steuerungseinrichtung die Antriebseinrichtung nach dem Herstellen des pneumatischen Anhaftungszustands in der Kornvereinzelungseinrichtung selbsttätig ansteuert, besteht nicht die Gefahr, dass der Ausbringvorgang ohne vorbelegten Kornaufnahmekörper gestartet oder fortgesetzt wird. Dadurch, dass der Kornaufnahmekörper eine Vorbelegungsrotation über einen vorgegebenen Vorbelegungsdrehwinkel und/oder über eine vorgegebene Vorbelegungszeitdauer ausführt, ist keine separate Sensorik zum Erfassen von Körnern in einer Ablageleitung für die Vorbelegungsfunktion erforderlich.

Durch den vorgegebenen Vorbelegungsdrehwinkel und/oder durch die vorgegebene Vorbelegungszeitdauer steht das Saatgut für den anstehenden Sävorgang unmittelbar zur Verfügung.

Der Kornaufnahmekörper kann eine Vereinzelungsscheibe sein. Alternativ kann der Kornaufnahmekörper auch eine Vereinzelungstrommel sein.

In einer bevorzugten Ausführungsform des erfindungsgemäßen Verfahrens steuert die Steuerungseinrichtung die Antriebseinrichtung derart an, dass die Vorbelegungsrotation des Kornaufnahmekörpers nach Erreichen des Vorbelegungsdrehwinkels und/oder nach Ablauf der Vorbelegungszeitdauer unterbrochen wird. Durch das Unterbrechen der Vorbelegungsrotation wird vermieden, dass im Rahmen der Vorbelegung Körner auf die landwirtschaftliche Nutzfläche abgegeben werden. Die Steuerungseinrichtung kann die Antriebseinrichtung derart ansteuern, dass der Kornaufnahmekörper beim Herstellen des pneumatischen Anhaftungszustands von einem Stillstand in Drehbewegung versetzt wird oder beim Herstellen des pneumatischen Anhaftungszustands bereits eine Drehbewegung ausführt. Vor dem Herstellen des pneumatischen Anhaftungszustands bleiben noch keine Körner an dem sich drehenden Kornaufnahmekörper haften.

Das erfindungsgemäße Verfahren wird ferner dadurch vorteilhaft weitergebildet, dass der vorgegebene Vorbelegungsdrehwinkel weniger als 720 Grad, vorzugsweise weniger als 360 Grad, beträgt. Vorzugsweise führt der Kornaufnahmekörper im Rahmen der Vorbelegung nach dem Herstellen des pneumatischen Anhaftungszustands weniger als eine Umdrehung aus. Durch den Vorbelegungsdrehwinkel wird sichergestellt, dass keine bereits an dem Kornaufnahmekörper anhaftenden Körner in eine Ablageleitung gelangen und auf der landwirtschaftlichen Nutzfläche abgelegt werden.

In einer weiteren bevorzugten Ausführungsform des erfindungsgemäßen Verfahrens beträgt die vorgegebene Vorbelegungszeitdauer weniger als 15 Sekunden, vorzugsweise weniger als 10 Sekunden. Besonders bevorzugt beträgt die vorgegebene Vorbelegungszeitdauer weniger als 5 Sekunden, beispielsweise etwa 3 Sekunden. Durch die Vorbelegungszeitdauer wird sichergestellt, dass keine bereits an dem Kornaufnahmekörper anhaftenden Körner in eine Ablageleitung gelangen und auf der landwirtschaftlichen Nutzfläche abgelegt werden.

Es ist darüber hinaus ein erfindungsgemäßes Verfahren vorteilhaft, bei welchem die Steuerungseinrichtung die Antriebseinrichtung derart ansteuert, dass die Vorbelegungsrotation des Kornaufnahmekörpers mit einer vorgegebenen Vorbelegungsdrehgeschwindigkeit erfolgt. Die Vorbelegungsdrehgeschwindigkeit kann vergleichsweise gering sein, damit die Kornaufnahmen beim Bewegen durch den Kornvorrat sicher belegt werden und ein unbeabsichtigtes Abschleudern der Körner vermieden wird. Die Vorbelegungsdrehgeschwindigkeit kann bei Erreichen des pneumatischen Anhaftungszustands bereits vorliegen oder wird nach dem Erreichen des pneumatischen Anhaftungszustands durch Anfahren bzw. Beschleunigen des Kornaufnahmekörpers eingestellt.

Es ist darüber hinaus ein erfindungsgemäßes Verfahren bevorzugt, bei welchem die vorgegebene Vorbelegungsdrehgeschwindigkeit zwischen 5 und 25 Umdrehungen pro Minute beträgt. Besonders bevorzugt beträgt die vorgegebene Vorbelegungsdrehgeschwindigkeit zwischen 10 und 20 Umdrehungen pro Minute, insbesondere etwa 18 Umdrehungen pro Minute. Die nach erfolgter Vorbelegung des Kornaufnahmekörpers eingestellte Drehgeschwindigkeit des Kornaufnahmekörpers während des Ausbringvorgangs hängt dann von der Fahrgeschwindigkeit, dem beabsichtigten Längsabstand der Körner auf der landwirtschaftlichen Nutzfläche und der Anzahl der Kornaufnahmen des Kornaufnahmekörpers ab.

In einer weiteren bevorzugten Ausführungsform des erfindungsgemäßen Verfahrens wird der pneumatische Anhaftungszustand in der Kornvereinzelungseinrichtung über den Betrieb eines Gebläses hergestellt. Mithilfe des Gebläses wird über den Kornaufnahmekörper eine Druckdifferenz erzeugt. Die Kornaufnahmen des Kornaufnahmekörpers sind als Vertiefungen und/oder Durchbrüche des Kornvereinzelungskörpers ausgebildet. Aufgrund der Druckdifferenz über den Kornaufnahmekörper entsteht ein Luftzug durch die Kornaufnahmen, durch den die Körner an den Kornaufnahmen anhaften. Dies kann erfolgen, indem die Körner durch einen Überdruck an die Kornaufnahmen gedrückt oder durch einen Unterdruck an die Kornaufnahmen gezogen werden. Die Steuerungseinrichtung das Gebläse steuert derart an, dass der pneumatische Anhaftungszustand oder ein anderer pneumatischer Haltezustand, bei welchem die Körner an den Kornaufnahmen des Kornaufnahmekörpers anhaften, nach dem Ausführen der Vorbelegungsrotation durch den Kornaufnahmekörper aufrechterhalten wird. Der pneumatische Anhaftungszustand oder der pneumatische Haltezustand wird also bei Stillstand des Kornaufnahmekörpers aufrechterhalten. Würde der pneumatische Anhaftungszustand oder der pneumatische Haltezustand nicht aufrechterhalten werden, würden die Körner sich von den Kornaufnahmen lösen, sodass der Kornaufnahmekörper wieder in einen nicht-vorbelegten Zustand überführt werden würde.

Das erfindungsgemäße Verfahren wird ferner dadurch vorteilhaft weitergebildet, dass die Steuerungseinrichtung den pneumatischen Anhaftungszustand durch Einstellen einer Mindestdrehzahl am Gebläse herstellt. Das Verfahren umfasst vorzugsweise das Überwachen der Drehzahl des Gebläses. Die Mindestdrehzahl zum Herstellen des pneumatischen Anhaftungszustands kann auf einem Speicher der Steuerungseinrichtung hinterlegt sein oder durch einen Benutzer vorgegeben werden. Beispielsweise kann die Mindestdrehzahl vom Benutzer über die Auswahl eines Saatguttyps einstellbar sein, wobei für den Saatguttyp eine Mindestdrehzahl auf einem Speicher der Steuerungseinrichtung hinterlegt ist.

Es ist darüber hinaus ein erfindungsgemäßes Verfahren vorteilhaft, bei welchem die Steuerungseinrichtung den pneumatischen Anhaftungszustand durch Einstellen eines pneumatischen Mindestdrucks in der Vereinzelungseinrichtung herstellt. Der Mindestdruck kann vom Benutzer und/oder selbsttätig durch die Steuerungseinrichtung einstellbar sein. Beispielsweise kann der Mindestdruck über die Auswahl eines Saatguttyps einstellbar sein, wobei für den Saatguttyp ein Mindestdruck auf einem Speicher der Steuerungseinrichtung hinterlegt sein kann. Das Verfahren umfasst vorzugsweise das sensorische Erfassen des pneumatischen Drucks in der Vereinzelungseinrichtung, wobei der sensorisch erfasste Druck in der Vereinzelungseinrichtung von der Steuerungseinrichtung zur Einstellung und/oder Regelung des Drucks in der Vereinzelungseinrichtung und/oder der Drehzahl des Gebläses verwendet wird.

Die Steuerungseinrichtung ist vorzugsweise Bestandteil der Sämaschine und/oder eines in einem Zugfahrzeug angeordneten Bedienterminals und/oder eines Mobilgeräts. Die Steuerungseinrichtung ist vorzugsweise eine elektronische Steuerungseinrichtung.

Die der Erfindung zugrunde liegende Aufgabe wird ferner durch eine Sämaschine der eingangs genannten Art gelöst, wobei die erfindungsgemäße Sämaschine eine Steuerungseinrichtung aufweist, welche dazu eingerichtet ist, die Antriebseinrichtung nach dem Herstellen des pneumatischen Anhaftungszustands in der Kornvereinzelungseinrichtung selbsttätig derart anzusteuern, dass der Kornaufnahmekörper eine Vorbelegungsrotation über einen vorgegebenen Vorbelegungsdrehwinkel und/oder über eine vorgegebene Vorbelegungszeitdauer ausführt.

Die erfindungsgemäße Sämaschine wird ferner dadurch vorteilhaft weitergebildet, dass die Sämaschine zum Ausführen des Verfahrens nach einer der vorstehend beschriebenen Ausführungsformen ausgebildet ist. Hinsichtlich der Vorteile und Modifikationen der erfindungsgemäßen Sämaschine wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Vereinzelungssystem einer erfindungsgemäßen Sämaschine in einer schematischen Darstellung; und
- Fig. 2: Druck- und Drehwinkelentwicklungen während des Ausführens des erfindungsgemäßen Verfahrens in einer Diagrammdarstellung.

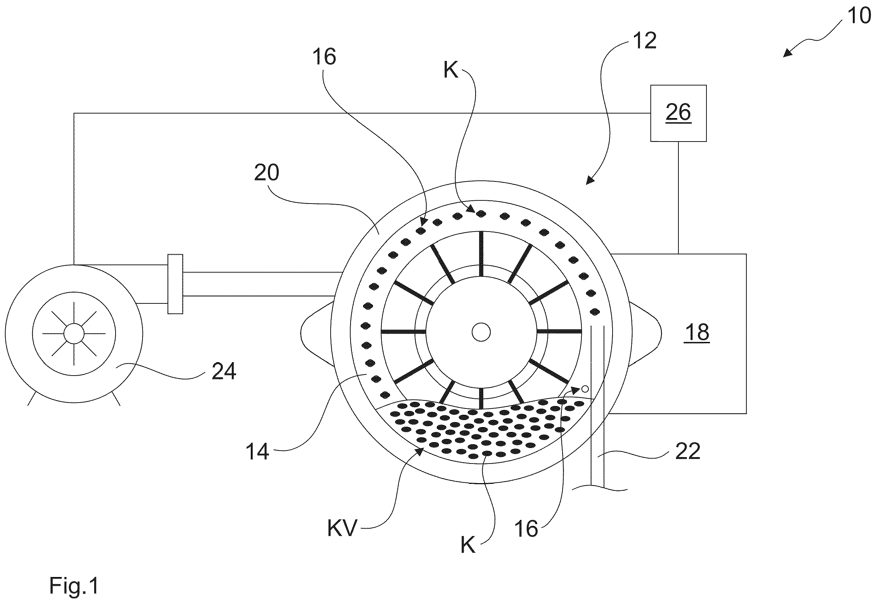

Die Fig. 1 zeigt ein Vereinzelungssystem 10 einer Sämaschine. Das Vereinzelungssystem 10 umfasst eine Kornvereinzelungseinrichtung 12, welche einen Kornaufnahmekörper 14 mit mehreren Kornaufnahmen 16 umfasst. Die Kornvereinzelungseinrichtung 12 umfasst ferner eine Antriebseinrichtung 18 zum rotatorischen Antreiben des Kornaufnahmekörpers 14. Das Vereinzelungssystem 10 kann mehrere Vereinzelungseinrichtungen 12 umfassen, insbesondere kann jede Reiheneinheit einer Sämaschine eine Vereinzelungseinrichtung 12 umfassen.

Der Kornaufnahmekörper 14 ist als Vereinzelungsscheibe ausgebildet und befindet sich in einer Vereinzelungskammer 20 der Kornvereinzelungseinrichtung 12. Die Kornaufnahmen 16 sind als Vertiefungen und/oder Durchbrüche des Kornaufnahmekörpers 14 ausgebildete Kornaufnahmetaschen, welche entlang eines kreisringförmigen Kornaufnahmenpfads angeordnet sind. Durch ein rotatorisches Antreiben des Kornaufnahmekörpers 14 werden die Kornaufnahmen 16 durch einen sich in der Vereinzelungskammer 20 befindenden Kornvorrat KV geführt, sodass bei geeigneten Druckverhältnissen jeweils ein Korn K in den jeweiligen Kornaufnahmen 16 anhaftet. In dem dargestellten Zustand befindet sich lediglich in einer sich außerhalb des Kornvorrates KV befindenden Kornaufnahme 16 kein Korn K. Die übrigen Kornaufnahmen 16 sind mit Körnern K belegt.

Beim Ausführen einer Rotationsbewegung werden die Kornaufnahmen 16 an einer Einlassöffnung einer Ablageleitung 22 vorbeibewegt, über welche die Körner K in Richtung der landwirtschaftlichen Nutzfläche geleitet werden. Sobald sich die Kornaufnahmen 16 im Nahbereich der Einlassöffnung der Ablageleitung 22 befinden, wird der Druckzustand in der jeweiligen Kornaufnahme 16 temporär so verändert, dass sich das Korn K aus der Kornaufnahme 16 löst und durch die Ablageleitung 22 in Richtung der landwirtschaftlichen Nutzfläche geführt wird.

Das Vereinzelungssystem 10 der Sämaschine umfasst ferner ein Gebläse 24 zum Herstellen eines pneumatischen Anhaftungszustands in der Kornvereinzelungseinrichtung 12. Wenn der pneumatische Anhaftungszustand in der Kornvereinzelungseinrichtung 12 hergestellt ist, haften Körner K beim Bewegen der Kornaufnahmen 16 durch den Kornvorrat KV an den Kornaufnahmen 16 des Kornaufnahmekörpers 14 an.

Über eine Steuerungseinrichtung 26 des Vereinzelungssystems 10 wird die als Elektromotor ausgebildete Antriebseinrichtung 18 der Kornvereinzelungseinrichtung 12 und der Betrieb des Gebläses 24 gesteuert. Die Steuerungseinrichtung 26 steuert die Antriebseinrichtung 18 nach dem Herstellen des pneumatischen Anhaftungszustands im Rahmen der Vorbelegung der Kornaufnahmen 16 selbsttätig derart an, dass der Kornaufnahmekörper 14 eine Vorbelegungsrotation über einen vorgegebenen Vorbelegungsdrehwinkel φ_{vb} und/oder über eine vorgegebene Vorbelegungszeitdauer Δt_{vb} ausführt. Dadurch, dass die Steuerungseinrichtung 26 die Antriebseinrichtung 18 nach dem Herstellen des pneumatischen Anhaftungszustands selbsttätig ansteuert, besteht nicht die Gefahr, dass der Ausbringvorgang ohne vorbelegten Kornaufnahmekörper 14 gestartet oder fortgesetzt wird. Durch den vorgegebenen Vorbelegungsdrehwinkel φ_{vb} und/oder durch die vorgegebene Vorbelegungszeitdauer Δt_{vb} steht das Saatgut für den anstehenden Sävorgang unmittelbar zur Verfügung.

Die Steuerungseinrichtung 26 steuert die Antriebseinrichtung 18 derart an, dass die Vorbelegungsrotation des Kornaufnahmekörpers 14 mit einer vorgegebenen Vorbelegungsdrehgeschwindigkeit erfolgt. Die Vorbelegungsdrehgeschwindigkeit ist vergleichsweise gering, damit die Kornaufnahmen 16 beim Bewegen durch den Kornvorrat KV sicher belegt werden. Die vorgegebene Vorbelegungsdrehgeschwindigkeit beträgt zwischen 5 und 25 Umdrehungen pro Minute.

Die Steuerungseinrichtung 26 steuert die Antriebseinrichtung 18 derart an, dass die Vorbelegungsrotation des Kornaufnahmekörpers 14 nach Erreichen des Vorbelegungsdrehwinkels φ_{vb} und/oder nach Ablauf der Vorbelegungszeitdauer Δt_{vb} unterbrochen wird. Somit wird vermieden, dass im Rahmen der Vorbelegung Körner auf die landwirtschaftliche Nutzfläche abgegeben werden. Ferner steuert die Steuerungseinrichtung 26 das Gebläse 24 derart an, dass der pneumatische Anhaftungszustand oder ein anderer pneumatischer Haltezustand, bei welchem die Körner K an den Kornaufnahmen 16 des Kornaufnahmekörpers 14 anhaften, nach dem Ausführen der Vorbelegungsrotation durch den Kornaufnahmekörper 14 aufrechterhalten wird. Der pneumatische Anhaftungszustand oder der pneumatische Haltezustand wird also bei Stillstand des Kornaufnahmekörpers 14 aufrechterhalten.

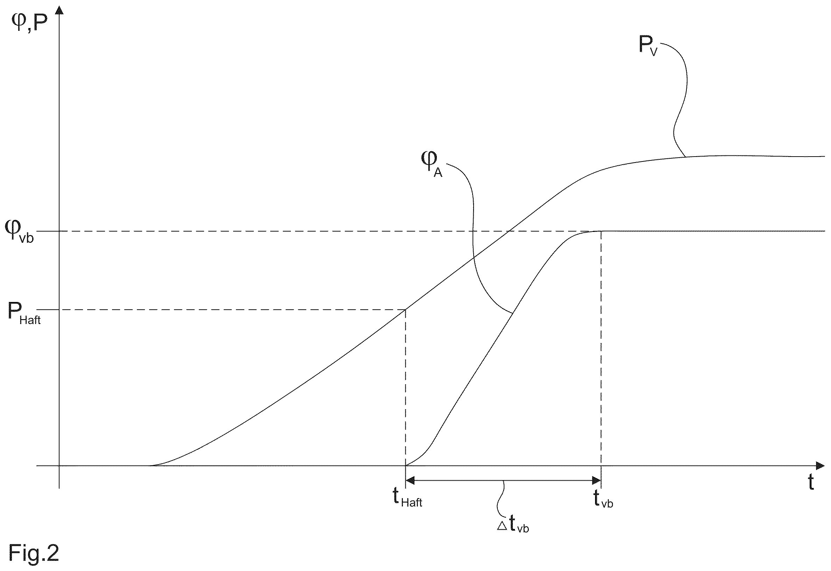

Die Fig. 2 zeigt den Luftdruck P_{V} in der Vereinzelungseinrichtung 12 während des Vorbelegens der Kornaufnahmen 16 eines Kornaufnahmekörpers 14 und den Drehwinkel φ_{A} des Kornaufnahmekörpers 14 während des Vorbelegens über die Zeit t.

Das Diagramm zeigt, dass das Gebläse 24 der Sämaschine von der Steuerungseinrichtung 26 zunächst derart angesteuert wird, dass der Luftdruck P_{V} in der Vereinzelungseinrichtung 12 erhöht wird. Wenn der Luftdruck P_{V} in der Vereinzelungseinrichtung 12 den Mindestdruck P_{Haft} erreicht, wurde ein pneumatischer Anhaftungszustand in der Kornvereinzelungseinrichtung 12 hergestellt, bei welchem Körner K an Kornaufnahmen 16 des Kornaufnahmekörpers 14 anhaften.

Die Steuerungseinrichtung 26 steuert die Antriebseinrichtung 18, über welche der Kornaufnahmekörper 14 rotatorisch angetrieben wird, nach dem Herstellen des pneumatischen Anhaftungszustands selbsttätig derart an, dass der Kornaufnahmekörper 14 eine Vorbelegungsrotation über einen vorgegebenen Vorbelegungsdrehwinkel φ_{vb} und/oder über eine vorgegebene Vorbelegungszeitdauer Δt_{vb} ausführt. Die Vorbelegungszeitdauer Δt_{vb} erstreckt sich zwischen dem Anhaftungsstartzeitpunkt t_{Haft} und dem Vorbelegungsbeendigungszeitpunkt t_{vb}. Der vorgegebene Vorbelegungsdrehwinkel φ_{vb} beträgt weniger als 360°. Der Kornaufnahmekörper 14 führt im Rahmen der Vorbelegung nach Herstellen des pneumatischen Anhaftungszustands also weniger als eine Umdrehung aus. Die Vorbelegungszeitdauer Δt_{vb} beträgt weniger als 15 Sekunden.

Während der Vorbelegungszeitdauer Δt_{vb} steigt der Druck P_{V} in der Vereinzelungseinrichtung 12 weiter an und erreicht schließlich den beabsichtigten Vereinzelungsluftdruck, welcher für die Kornvereinzelung während des Ablagevorgangs benötigt wird.

### Bezugszeichen

- 10: Vereinzelungssystem
- 12: Kornvereinzelungseinrichtung
- 14: Kornaufnahmekörper
- 16: Kornaufnahmen
- 18: Antriebseinrichtung
- 20: Vereinzelungskammer
- 22: Ablageleitung
- 24: Gebläse
- 26: Steuerungseinrichtung
- K: Körner
- KV: Kornvorrat
- P_{Haft}: Mindestdruck
- P_{V}: Luftdruck in den Vereinzelungseinrichtung
- t_{Haft}: Anhaftungsstartzeitpunkt
- t_{vb}: Vorbelegungsbeendigungszeitpunkt
- Δt_{vb}: Vorbelegungszeitdauer
- φ_{vb}: Vorbelegungsdrehwinkel
- φ_{A}: Drehwinkel des Kornaufnahmekörpers

## Patentansprüche

1. Verfahren zum Vorbelegen von Kornaufnahmen (16) eines rotierend antreibbaren Kornaufnahmekörpers (14) einer Kornvereinzelungseinrichtung (12) einer Sämaschine vor den Beginn oder der Fortsetzung einer Kornablage auf einer landwirtschaftlichen Nutzfläche, mit den Schritten:
- Herstellen eines pneumatischen Anhaftungszustands in der Kornvereinzelungseinrichtung (12), bei welchem Körner (K) an Kornaufnahmen (16) des Kornaufnahmekörpers (14) anhaften; und
- rotatorisches Antreiben des Kornaufnahmekörpers (14) zum Bewegen der Kornaufnahmen (16) durch einen Kornvorrat (KV) in der Kornvereinzelungseinrichtung (12) mittels einer Antriebseinrichtung (18);
**dadurch gekennzeichnet, dass** eine Steuerungseinrichtung (26) die Antriebseinrichtung (18) nach dem Herstellen des pneumatischen Anhaftungszustands in der Kornvereinzelungseinrichtung (12) selbsttätig derart ansteuert, dass der Kornaufnahmekörper (14) eine Vorbelegungsrotation über einen vorgegebenen Vorbelegungsdrehwinkel (φ_{vb}) und/oder über eine vorgegebene Vorbelegungszeitdauer (Δt_{vb}) ausführt.

2. Verfahren nach Anspruch 1,
**dadurch gekennzeichnet, dass** die Steuerungseinrichtung (26) die Antriebseinrichtung (18) derart ansteuert, dass die Vorbelegungsrotation des Kornaufnahmekörpers (14) nach Erreichen des Vorbelegungsdrehwinkels (φ_{vb}) und/oder nach Ablauf der Vorbelegungszeitdauer (Δt_{vb}) unterbrochen wird.

3. Verfahren nach Anspruch 1 oder 2,
**dadurch gekennzeichnet, dass** der vorgegebene Vorbelegungsdrehwinkel (φ_{vb}) weniger als 720 Grad, vorzugsweise weniger als 360 Grad, beträgt.

4. Verfahren nach einem der vorstehenden Ansprüche,
**dadurch gekennzeichnet, dass** die vorgegebene Vorbelegungszeitdauer (Δt_{vb}) weniger als 15 Sekunden, vorzugsweise weniger als 10 Sekunden, beträgt.

5. Verfahren nach einem der vorstehenden Ansprüche,
**dadurch gekennzeichnet, dass** die Steuerungseinrichtung (26) die Antriebseinrichtung (18) derart ansteuert, dass die Vorbelegungsrotation des Kornaufnahmekörpers (14) mit einer vorgegebenen Vorbelegungsdrehgeschwindigkeit erfolgt.

6. Verfahren nach Anspruch 5,
**dadurch gekennzeichnet, dass** die vorgegebene Vorbelegungsdrehgeschwindigkeit zwischen 5 und 25 Umdrehungen pro Minute beträgt.

7. Verfahren nach einem der vorstehenden Ansprüche,
**dadurch gekennzeichnet, dass** der pneumatische Anhaftungszustand in der Kornvereinzelungseinrichtung (12) über den Betrieb eines Gebläses (24) hergestellt wird, wobei die Steuerungseinrichtung (26) das Gebläse (24) derart ansteuert, dass der pneumatische Anhaftungszustand oder ein anderer pneumatischer Haltezustand, bei welchem die Körner (K) an den Kornaufnahmen (16) des Kornaufnahmekörpers (14) anhaften, nach dem Ausführen der Vorbelegungsrotation durch den Kornaufnahmekörper (14) aufrechterhalten wird.

8. Verfahren nach Anspruch 7,
**dadurch gekennzeichnet, dass** die Steuerungseinrichtung (26) den pneumatischen Anhaftungszustand durch Einstellen einer Mindestdrehzahl am dem Gebläse (24) herstellt.

9. Verfahren nach einem der vorstehenden Ansprüche,
**dadurch gekennzeichnet, dass** die Steuerungseinrichtung (26) den pneumatischen Anhaftungszustand durch Einstellen eines pneumatischen Mindestdrucks (P_{Haft}) in der Vereinzelungseinrichtung herstellt.

10. Sämaschine, mit
- zumindest einer Kornvereinzelungseinrichtung (12), welche einen Kornaufnahmekörper (14) und eine Antriebseinrichtung (18) zum rotatorischen Antreiben des Kornaufnahmekörpers (14) umfasst; und
- einem Gebläse (24) zum Herstellen eines pneumatischen Anhaftungszustands in der Kornvereinzelungseinrichtung (12), bei welchem Körner (K) beim Bewegen der Kornaufnahmen (16) durch einen Kornvorrat (KV) in der Kornvereinzelungseinrichtung (12) an Kornaufnahmen (16) des Kornaufnahmekörpers (14) anhaften;
**gekennzeichnet durch** eine Steuerungseinrichtung (26), welche dazu eingerichtet ist, die Antriebseinrichtung (18) nach dem Herstellen des pneumatischen Anhaftungszustands in der Kornvereinzelungseinrichtung (12) selbsttätig derart anzusteuern, dass der Kornaufnahmekörper (14) eine Vorbelegungsrotation über einen vorgegebenen Vorbelegungsdrehwinkel (φ_{vb}) und/oder über eine vorgegebene Vorbelegungszeitdauer (Δt_{vb}) ausführt.

11. Sämaschine nach Anspruch 10,
**dadurch gekennzeichnet, dass** die Sämaschine zum Ausführen des Verfahrens nach einem der Ansprüche 1 bis 9 ausgebildet ist.
